# EUROPEAN PATENT APPLICATION

(11) **EP 3 031 787 A1**
(43) Date of publication of application: **15.06.2016**
(21) Application number: 14835015.0
(22) Date of filing: 30.07.2014
(51) Int. Cl.: C03C 27/12, B60J 1/00

(54) **LAMINATED GLASS FOR VEHICLE**

(30) Priority: 05.08.2013 JP 2013162413
(71) Applicant: Asahi Glass Company, Limited, Tokyo 100-8405 (JP)
(72) Inventor: NAKAMURA, Atsushi, Tokyo 100-8405 (JP); WAKAI, Hironao, Tokyo 100-8405 (JP)
(74) Representative: Müller-Boré & Partner Patentanwälte PartG mbB
(86) International application number: PCT/JP2014/070074
(87) International publication number: WO 2015/019921

(57) **Abstract**

Laminated glass for a vehicle includes an intermediate film that is disposed between a first glass substrate and a second glass substrate, wherein the intermediate film includes, from a side that is close to the first glass substrate, a first outer layer, an inner layer, and a second outer layer, wherein the inner layer has Shore hardness that is less than those of the first outer layer and the second outer layer, wherein each of the first outer layer and the second outer layer includes an infrared shielding material, wherein a first portion that includes almost no infrared shielding material is formed at an end portion of the first outer layer at an upper edge of the laminated glass, and the first portion includes an uncolored resin, and/or wherein a second portion that includes almost no infrared shielding material is formed at the end portion of the second outer layer at the upper edge of the laminated glass, and the second portion includes an uncolored resin.

## Description

### TECHNICAL FIELD

The present invention relates to laminated glass for a vehicle.

### BACKGROUND ART

Laminated glass has been widely used as a windshield or the like for a vehicle, for example, because the laminated glass has a characteristic such that pieces of broken glass are not so easily scattered, upon the laminated glass being broken by receiving an impulse.

Usually, such laminated glass for a vehicle can be formed of a first glass substrate, a second glass substrate, and an intermediate film that is disposed between the glass substrates.

Further, in recent laminated glass for a vehicle, in order to suppress increase in temperature inside the vehicle, it has been proposed to add an infrared shielding property to the laminated glass. Such laminated glass with an infrared shielding property can be produced by dispersing an infrared shielding material in an intermediate film (Patent Document 1).

### PRIOR ART DOCUMENTS

### PATENT DOCUMENTS

Patent Document 1: WO 2011/024787

### SUMMARY OF THE INVENTION

### PROBLEM TO BE SOLVED BY THE INVENTION

As described above, in recent years, laminated glass with an infrared shielding property that is for a vehicle has been proposed so as to suppress a temperature increase inside the vehicle. Such laminated glass having an infrared shielding property can be produced by dispersing an infrared shielding material in an intermediate film.

Here, in general, in many cases, an infrared shielding material exhibits shielding performance with respect to a light beam having a wavelength in a range from visible light (at a long-wavelength side) to near-infrared light. In other words, it can be said that an infrared shielding material may have a shielding effect not only with respect to an infrared region, but also with respect to a long-wavelength side of visible light.

Thus, in the present invention, "an infrared shielding material" may mean all materials that can significantly decrease light transmittance in a wavelength region from 700 nm to 1000 nm.

However, in general, a sensor device may often be disposed in laminated glass for a vehicle, such as a rain sensor, a collision prevention sensor, a white line detector, and a night vision device. Then, such a sensor device, in many cases, operates at a wavelength from that of visible light (the long-wavelength side) to that of infrared light.

Thus, if an intermediate film includes an infrared shielding material, light transmittance from a visible light (a long-wavelength side) region to an infrared region can be lowered in such laminated glass for a vehicle, and a problem may occur such that the sensor may not operate properly. Consequently, a problem is that, for usual laminated glass for a vehicle, it can be difficult to achieve both an effect of suppressing temperature increase inside the vehicle and proper operation of a sensor device.

The present invention is achieved in view of such a problem, and an object of the present invention is to provide laminated glass for a vehicle that can significantly suppress temperature increase inside a vehicle, without adversely affecting operation of a sensor device.

### MEANS FOR SOLVING THE PROBLEM

According to the present invention, there is provided laminated glass for a vehicle, the laminated glass including an intermediate film that is disposed between a first glass substrate and a second glass substrate, wherein the intermediate film includes, from a side that is close to the first glass substrate, a first outer layer, an inner layer, and a second outer layer, wherein the inner layer has Shore hardness that is less than those of the first outer layer and the second outer layer, wherein each of the first outer layer and the second outer layer includes an infrared shielding material, wherein a first portion that includes almost no infrared shielding material is formed at an end portion of the first outer layer at an upper edge of the laminated glass, and the first portion includes an uncolored resin, and/or wherein a second portion that includes almost no infrared shielding material is formed at the end portion of the second outer layer at the upper edge of the laminated glass, and the second portion includes an uncolored resin.

Here, in the laminated glass according to the present invention, the first portion and/or the second portion may be formed over the entire end portion of the upper edge of the laminated glass.

Further, in the laminated glass according to the present invention, thickness of the intermediate film may be greater at the end portion of the upper edge of the laminated glass compared to the thickness of the intermediate film at an end portion of a bottom edge of the laminated glass.

Further, the laminated glass according to the present invention includes a first region and a second region, upon the laminated glass being viewed in a direction in which the first glass substrate and the second glass substrate are laminated, wherein the first region corresponds to the first portion of the first outer layer and/or the second portion of the second outer layer, and wherein a sensor may be installed in the first region of the laminated glass.

### ADVANTAGEOUS EFFECT OF THE INVENTION

According to the present invention, laminated glass for a vehicle can be provided such that temperature increase inside a vehicle can be significantly suppressed, without adversely affecting operation of a sensor device.

### BRIEF DESCRIPTION OF THE DRAWINGS

FIG. 1 is a cross-sectional view schematically showing a configuration of usual laminate glass for a vehicle;
FIG. 2 is a top view schematically showing first laminated glass for a vehicle according to an embodiment of the present invention;
FIG. 3 is a diagram schematically showing a cross section along an A-A line of the first laminated glass for a vehicle shown in FIG. 2;
FIG. 4 is a diagram schematically illustrating an example of a flow of a method of producing the first laminated glass;
FIG. 5 is a cross-sectional view schematically showing second laminate glass for a vehicle according to another embodiment of the present invention; and
FIG. 6 is a cross-sectional view schematically showing third laminated glass for a vehicle according to another embodiment of the present invention.

### EMBODIMENTS FOR IMPLEMENTING THE INVENTION

The present invention is described below by referring to the figures.

### (Usual laminated glass for a vehicle)

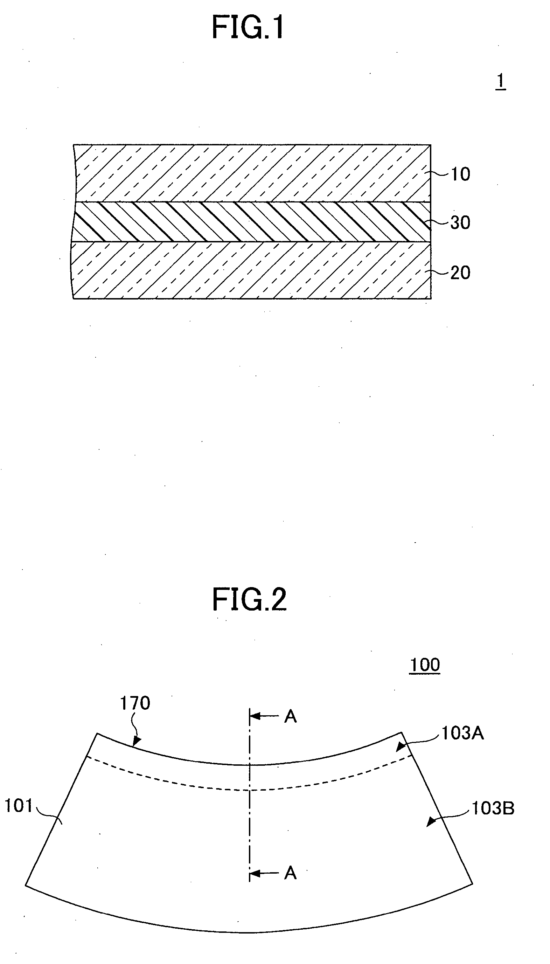

For a better understanding of features of laminated glass for a vehicle according to the present invention, first, a configuration of usual laminated glass for a vehicle is briefly described by referring to FIG. 1.

FIG. 1 shows a schematic cross-sectional view of usual laminated glass for a vehicle.

As shown in FIG. 1, the usual laminated glass 1 for a vehicle may be formed of a first glass substrate 10, a second glass substrate 20, and an intermediate film 30 that is disposed between the glass substrates 10 and 20.

The intermediate film 30 may have a function to bond the two glass substrates 10 and 20 with each other. Additionally, the intermediate film 30 may include an infrared shielding material.

As described above, the infrared shielding material can cause light transmittance to be significantly decreased in a wavelength region from 700 nm to 1000 nm. Thus, the laminated glass 1 for a vehicle that includes the intermediate film 30 including the infrared shielding material can significantly suppress temperature increase inside the vehicle.

Here, a sensor device may often be disposed in laminated glass for a vehicle, such as a rain sensor, a collision prevention sensor, a white line detector, and a night vision device.

However, it may be difficult to install such a sensor device in the laminated glass 1 for a vehicle because, in the laminated glass 1 for a vehicle, the intermediate film 30 may include the infrared shielding material. Namely, a light beam having a wavelength from visible light (a long-wavelength side) to near-infrared light that can be used for operating a sensor device can be shielded by the infrared shielding material that can be included in the intermediate film 30.

In this manner, it can be difficult, with the usual laminated glass 1 for a vehicle, to achieve both an effect of suppressing temperature increase inside a vehicle and proper operation of a sensor device.

Whereas, according to the present invention, there is provided laminated glass for a vehicle, the laminated glass including an intermediate film that is disposed between a first glass substrate and a second glass substrate, wherein the intermediate film includes, from a side that is close to the first glass substrate, a first outer layer, an inner layer, and a second outer layer, wherein the inner layer has Shore hardness that is less than those of the first outer layer and the second outer layer, wherein each of the first outer layer and the second outer layer includes an infrared shielding material, wherein a first non-shielding portion that includes almost no infrared shielding material is formed at an end portion of the first outer layer at an upper edge of the laminated glass, and the first non-shielding portion includes an uncolored resin, and/or wherein a second non-shielding portion that includes almost no infrared shielding material is formed at the end portion of the second outer layer at the upper edge of the laminated glass, and the second non-shielding portion includes an uncolored resin.

The laminated glass for a vehicle according to the present invention can significantly suppress temperature increase inside the vehicle because the intermediate film includes the first outer layer including the infrared shielding material and the second outer layer including the infrared shielding material.

Additionally, in the laminated glass for a vehicle according to the present invention, at least one of the first outer layer and the second outer layer includes, at the end portion of the upper edge of the laminated glass, the non-shielding portion that includes almost no infrared shielding material. Furthermore, the non-shielding portion includes the uncolored resin, and the non-shielding portion may preferably be formed of the uncolored resin.

With such a configuration of the laminated glass for a vehicle, a high transparency region that may not shield a light beam having a wavelength from that of visible light (a long-wavelength side) to that of near-infrared light can be provided at a side of the upper edge of the laminated glass. Thus, by installing a sensor device at the high transparency region of the laminated glass for a vehicle, the sensor device can be properly operated.

By the above effects, the laminated glass for a vehicle according to the present invention can significantly suppress temperature increase inside the vehicle, without adversely affecting operation of the sensor device.

### (With regard to the laminated glass for a vehicle according to an embodiment of the present invention)

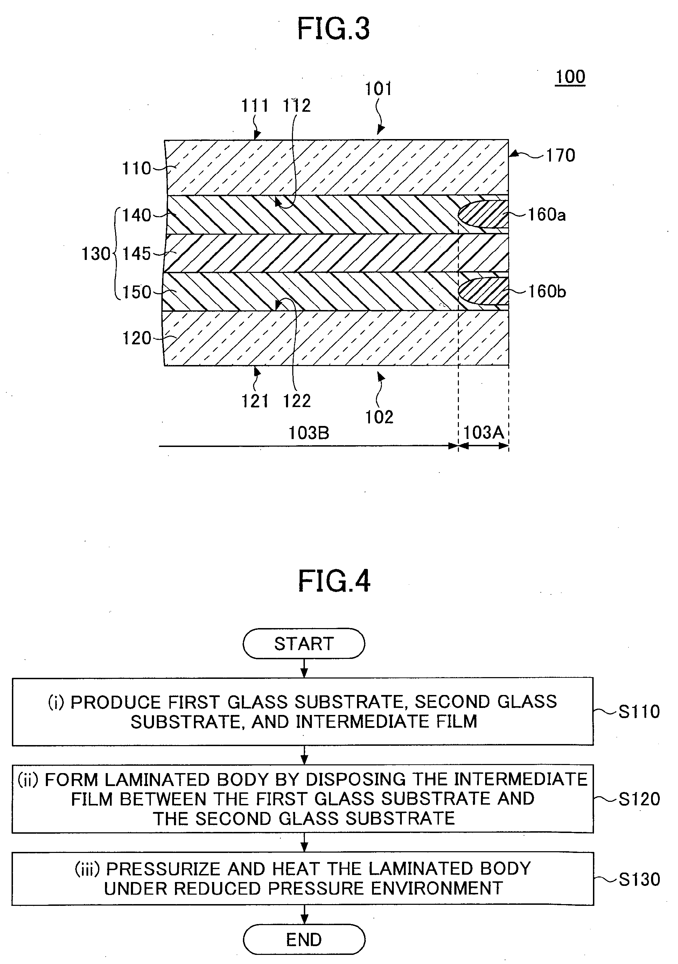

Next, the laminated glass for a vehicle according to an embodiment of the present invention is described in detail by referring to FIG. 2 and FIG. 3.

FIG. 2 schematically shows a front view of the laminated glass for a vehicle according to the embodiment of the present invention (which is referred to as "first laminated glass for a vehicle," hereinafter). Further, FIG. 3 schematically shows a cross-sectional view, along the A-A line, of the first laminated glass for a vehicle, which is shown in FIG. 2.

As shown in FIG. 2, the first laminated glass 100 for a vehicle may include a first main surface 101, and there is a second main surface 102 at an opposite side of the first main surface 101. The first laminated glass 100 for a vehicle may be provided with an upper edge 170. When the first laminated glass 100 for a vehicle is viewed from the first main surface 101, the first laminated glass 100 is provided with a first area 103A and a second area 103B.

As shown in FIG. 3, the first laminated glass 100 for a vehicle may be formed of a first glass substrate 110, a second glass substrate 120, and an intermediate film 130 that is disposed between the glass substrates 110 and 120.

The first glass substrate 110 may be provided with a first surface 111 and a second surface 112 that face each other. Additionally, the second glass substrate 120 may be provided with a first surface 121 and a second surface 122 that face each other. Among these, the first surface 111 of the first glass substrate 110 may form the first main surface 101 of the first laminated glass 100 for a vehicle, and the first surface 121 of the second glass substrate 120 may form the second main surface 102 of the first laminated glass 100 for a vehicle.

The intermediate film 130 has a function to bond the glass substrates 110 and 120 with each other. Further, the intermediate film 130 may include three layers. Namely, the intermediate film 130 may be formed by laminating, from a side that is close to the first glass substrate 110, a first outer layer 140, an inner layer 145, and a second outer layer 150, in this order.

A content of a plasticizer of the inner layer 145 may be large compared to those of the first outer layer 140 and the second outer layer 150, so that the outer layer 145 can be relatively soft. With such a configuration of the intermediate layer 130, a sound wave having a frequency in an audible range tends to be attenuated because the inner layer 145 that can be softer than the other layers is disposed at the center portion. Consequently, the first laminated glass 100 for a vehicle having such a configuration can demonstrate favorable sound insulation property.

Here, in the present application, it is assumed that the flexibility (hardness) of each of the layers 140, 145, and 150 of the intermediate film 130 is defined in terms of Shore hardness at ambient temperature (25 °C). The Shore hardness means hardness of a measurement target object that can be measured by a method that complies with JIS K6253 (a hardness test of rubber, vulcanized or thermoplastic) or ASTM D2240 (a test method of a rubber property/ durometer hardness).

Note that, though it is not clear in FIG. 3, an infrared shielding material may be dispersed in the first outer layer 140 and the second outer layer 150 of the intermediate film 130. By dispersing the infrared shielding material in the first outer layer 140 and the second outer layer 150, an infrared shielding property can be expressed in the first laminated glass 100 for a vehicle, and thereby temperature increase inside the vehicle can be suppressed.

Referring to FIG. 3 again, the first outer layer 140 that can be included in the intermediate film 130 may be provided with a first non-shielding portion 160a at a side of an edge surface of the upper edge 170 of the first laminated glass 100 for a vehicle. Similarly, the second outer layer 150 may be provided with a second non-shielding portion 160b at the side of the edge surface of the upper edge 170 of the first laminated glass 100 for a vehicle.

The first non-shielding portion 160a of the first outer layer 140 and the second non-shielding portion 160b of the second outer layer 150 may correspond to the first area 103A of the first laminated glass 100 for a vehicle in FIG. 2. In other words, the areas of the first outer layer 140 and the second outer layer 150 where the non-shielding portions 160a and 160b are disposed are the first area 103A of the first laminated glass 100 for a vehicle, and the areas of the first outer layer 140 and the second outer layer 150 where the non-shielding portions 160a and 160b are not disposed are the second area 103B of the first laminated glass 100 for a vehicle.

Here, though the first non-shielding portion 160a can be formed of an uncolored resin, almost no infrared shielding material is dispersed in the first non-shielding portion 160a. Similarly, though the second non-shielding portion 160b can be formed of an uncolored resin, almost no infrared shielding material is dispersed in the second non-shielding portion 160b. Namely, the first outer layer 140 may be formed of the first non-shielding portion 160a that includes almost no infrared shielding material, and another portion where the infrared shielding material is dispersed. Similarly, the second outer layer 150 may be formed of the second non-shielding portion 160b that includes almost no infrared shielding material, and another portion where the infrared shielding material is dispersed.

By forming the first outer layer 140 in such a manner, a portion having an infrared shielding property and a portion having almost no infrared shielding property can be formed within a surface of the first outer layer 140. Similarly, a portion having an infrared shielding property and a portion having almost no infrared shielding property can be formed within a surface of the second outer layer 150.

Additionally, by doing this, the first area 103A having no infrared shielding property and the second area 103B having an infrared shielding property can be formed on the main surfaces 101 and 102 of the first laminated glass 100 for a vehicle.

With the first laminated glass 100 for a vehicle that is configured in such a way, temperature increase inside the vehicle can be significantly suppressed by the presence of the second area 103B. In addition, when a sensor device is installed in the first area 103A, the sensor can be properly operated because shielding of a light beam that may be required for operating the sensor device can be significantly reduced or avoided.

### (With regard to each component members of the first laminated glass 100 for a vehicle)

Next, each of the members forming the first laminated glass 100 for a vehicle, such as shown in FIGS. 2 and 3, is described in detail.

### (First laminated glass 100 for a vehicle)

As described above, the first laminated glass 100 for a vehicle may be provided with the first area 103A and the second area 103B.

The width of the first area 103A (the length from the end portion (the upper edge 170)) is not particularly limited. The width of the first area 103A may be in a range from 50 mm to 200 mm, for example.

Note that, it may not be required that the first area 103A is formed across the entire upper edge 170 of the first laminated glass 100 for a vehicle. For example, the first area 103A may be formed at a part of the upper edge 170 of the first laminated glass 100 for a vehicle.

Further, the first laminated glass 100 for a vehicle may be applied, for example, to a windshield, side glass, rear glass, roof glass, and so forth of a vehicle.

Furthermore, the first laminated glass 100 for a vehicle may have a substantially flat shape, or a part of or all the first laminated glass 100 for a vehicle may have a curved shape.

### (The glass substrates 110, 120)

The first glass substrate 110 may have any composition, as long as the first glass substrate 110 is formed of glass. Additionally, the first glass substrate 110 may be formed, for example, by laminating a plurality of members. For example, the first glass substrate 110 may be a laminated body formed of a glass plate and a resin plate.

The thickness of the first glass substrate 110 is not particularly limited. However, when a windshield is assumed, the thickness of the first glass substrate 110 can be in a range from 1.0 mm to 2.5 mm, for example.

For the second glass substrate 120, a material that is the same as that of the first glass substrate 110 may also be used.

### (The intermediate film)

As described above, the intermediate film 130 may be formed of, at least, the three layers 140, 145, and 150.

Each layer may be formed of a polyvinyl acetal type resin, or an ethylene-vinyl acetate copolymer type resin, for example.

If any of the layers is a polyvinyl acetal type resin, the type of the polyvinyl acetal is not particularly limited. The polyvinyl acetal may be polyvinyl butylal, for example.

An amount of a plasticizer in each layer is not particularly limited. However, it can be noted that, in a usual case, the inner layer 145 may include the largest amount of the plasticizer. Note that, in a usual case, an amount of the plasticizer that is included in the first outer layer 140 and that of the second outer layer 150 can be almost the same.

A type of the plasticizer is not particularly limited. The plasticizer may be triethylene glycol di-2-ethyl hexanoate, for example.

As described above, the inner layer 145 has Shore hardness that is less than that of the outer layers 140 and 150 at an ambient temperature. Note that, the Shore hardness of the first outer layer 140 and that of the second outer layer may be substantially the same or different at an ambient temperature.

### (The infrared shielding material)

The infrared shielding material 5 that can be included in the first outer layer 140 and/or the second outer layer 150 are not particularly limited.

As an inorganic material based infrared shielding material, for example, a material selected from a metal, an oxide, a nitride, and a sulfide of Sn, Ti, Si, Zn, Zr, Fe, Al, Cr, Co, Ce, In, Ni, Ag, Cu, Pt, Mn, Ta, W, V, and Mo; or a material that is obtained by doping Sb or F to these can be considered. An inorganic material based infrared shielding material may particularly preferably be a tin oxide in which antimony is doped, or an indium oxide in which tin is doped. When an infrared material is a particulate, it's particle diameter is not particularly limited. However, it may be less than or equal to 0.2 µm, for example, and it can be in a range from 0.0001 µm to 0.15 µm, for example.

As an organic material based infrared shielding material, for example, the following can be considered: a diimonium-based pigment, an anthraquinone-based pigment, an aminium-based pigment, a cyanine-based pigment, a merocyanine-based pigment, a croconium-based pigment, a squarylium-based pigment, an azulenium-based pigment, a polymethine-based pigment, a naphthoquinone-based pigment, a pyrylium-based pigment, a phthalocyanine-based pigment, a naphthalocyanine pigment, a naphtholoctam-based pigment, an azo-based pigment, a condensed azo-based pigment, an indigo-based pigment, a perynone-based pigment, a perylene-based pigment, a dioxazine-based pigment, a quinacricone-based pigment, an isoindlinone-based pigment, a quinophthalone-based pigment, a pyrrole-based pigment, a thioindigo-based pigment, a metal complex-based pigment, a dithiol-based metal complex pigment, an indole phenol-based pigment, a triarylmethane-based pigment, and so forth. An organic material based infrared shielding material may particularly preferably be a phthalocyanine-based pigment.

These infrared-shielding materials can be used alone, or two or more types can be simultaneously used. A phthalocyanine-based pigment shows a sharp absorption in the near infrared wavelength region. Thus, if an infrared absorbing property having a more wider range is required, a phthalocyanine-based pigment and at least one type that is selected from ITO fine particles, ATO fine particles and composite tungsten oxide particles can preferably be combined and used.

### (With regard to a method of producing laminated glass for a vehicle)

Next, an example of a method of producing the first laminated glass, such as shown in FIGS. 2 and 3, is briefly explained by referring to FIG. 4.

As shown in FIG. 4, the method of producing laminated glass includes (i) a step of producing a first glass substrate, a second glass substrate, and an intermediate film (step S110); (ii) a step of forming a laminated body by disposing the intermediated film between the first glass substrate and the second glass substrate (step S120); and (iii) a step of pressurizing and heating the laminated body under a reduced pressure environment (step S130).

Note that, among the above-described steps, step S120 and step S130 are well know to those skilled in the art. Further, as a method of producing the first glass substrate and the second glass substrate, a usual method can be used. Thus, here, the method of producing the intermediate film at step S110 is especially described in detail.

Additionally, in the description below, for clarity, the reference numerals that are shown in FIGS. 2 and 3 are used to indicate the corresponding members.

### (The method of producing the intermediate film 130)

First, a mixed material (which is referred to as a mixed material A) for the first outer layer 140 and the second outer layer 150 of the intermediate film 130 are prepared in accordance with the following procedure.

A resin material, an infrared shielding material, and a plasticizer solution are prepared. The resin material may be a material, such as the above-described material, namely, a polyvinyl aceral-based resin, or an ethylene-vinyl acetate copolymer-based resin or the like. Further, as the plasticizer solution, a material, such as the above-described material, namely, triethylene glycol di-2-ethyl hexanoate may be used.

Subsequently, the infrared shielding material is dissolved in the plasticizer solution. Note that, in the plasticizer solution, optionally, pigments, antioxidants, and/or an organic material-based ultraviolet absorber can be added.

Subsequently, the plasticizer solution in which the infrared shielding material is dissolved is added to the resin material, and the mixed material A is prepared by blending and mixing it.

Subsequently, a mixed material (which is referred to as a mixed material B) for the non-shielding portion 160a and the non-shielding portion 160b is prepared in accordance with the following procedure.

A resin material and a plasticizer solution are prepared. The resin material may be the same as the resin material that is used for preparing the mixed material A. However, the resin material may be required to be an uncolored resin. Further, as the plasticizer solution, a plasticizer solution that is the same as the plasticizer solution that is used for preparing the mixed material A can be used. In the plasticizer solution, optionally, pigments, antioxidants, and/or an organic material-based ultraviolet absorber can be added.

Subsequently, the plasticizer solution is added to the resin material, and the mixed material B is prepared by blending and mixing it.

Additionally, a mixed material (which is referred to as a mixed material C) for the inner layer 145 is prepared in accordance with the following procedure.

A resin material and a plasticizer solution are prepared. The resin material may be the same as the resin material that is used for preparing the mixed material A. Further, as the plasticizer solution, a plasticizer solution that is the same as the plasticizer solution that is used for preparing the mixed material A can be used. In the plasticizer solution, optionally, pigments, antioxidants, and/or an organic material-based ultraviolet absorber can be added.

Subsequently, the plasticizer solution is added to the resin material, and the mixed material C is prepared by blending and mixing it. Here, it should be noted that an amount of the plasticizer solution that is added to the resin material is greater compared to the case of preparing the mixed material A. That is because, it may be necessary to soften the inner layer 145 , as compared to the outer layers 140 and 150.

Subsequently, a film for the intermediate film 130 is produced by performing extrusion molding at once by using mixed materials A to C that are obtained by the above-described process.

During extrusion molding, the mixed materials are arranged, so that two sets of a configuration (which is referred to as an outer layer component) can be formed such that the mixed material A is arranged to sandwich the mixed material B from both sides. Additionally, the mixed materials are arranged, so that the mixed material C is disposed between the outer layer components. By performing extrusion molding at once in such an arrangement state, the intermediate film 130 having the layer structure, such as shown in FIG. 3, for example, can be produced.

Note that it is apparent to those skilled in the art that the intermediate film 130 can be produced by a method other than the above-described method.

### (With regard to the laminated glass for a vehicle according to the embodiment of the present invention)

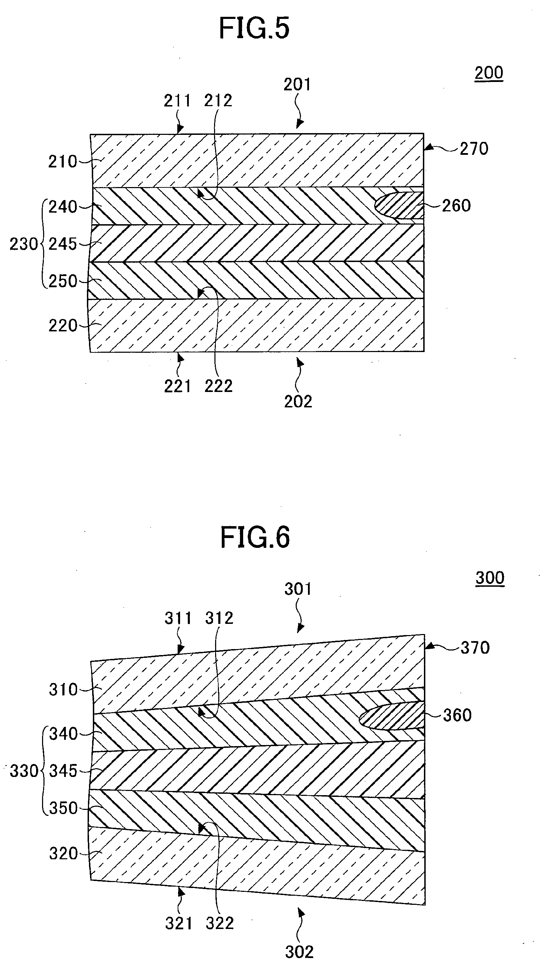

Next, another type of laminated glass for a vehicle according to the embodiment of the present invention is described by referring to FIG. 5.

FIG. 5 schematically shows a cross-section of the other type of the laminated glass for a vehicle (which is referred to as "the second laminated glass for a vehicle," hereinafter) according to the embodiment of the present invention.

As shown in FIG. 5, basically, the second laminated glass 200 for a vehicle may have a configuration that is similar to that of the first laminated glass 100 for a vehicle, which is shown in FIGS. 2 and 3. Thus, in FIG. 5, reference numerals that are obtained by adding 100 to the reference numerals that are shown in FIGS. 2 and 3 are attached to members that are similar to those of FIGS. 2 and 3.

However, the second laminated glass 200 for a vehicle is different from the first laminated glass 100 for a vehicle in a point that the second outer layer 250 of the intermediate film 230 includes no non-shielding portion. Namely, in the second laminated glass 200 for a vehicle, the infrared shielding material is dispersed across the whole second outer layer 250.

Whereas, similar to the case of the first laminated glass 100 for a vehicle, the first outer layer 240 is provided with the non-shielding portion 260 at the side of the edge surface of the upper edge 270 of the second laminated glass 200 for a vehicle. The non-shielding portion 260 may include an uncolored resin.

It can be apparent to those skilled in the art that, with the second laminated glass 200 for a vehicle that is configured in such a way, an effect can be obtained that is similar to that of the first laminated glass 100 for a vehicle, namely, both an effect that temperature increase inside the vehicle can be suppressed and an effect that a sensor device can be properly operated are obtained.

Note that, in the example of FIG. 5, the non-shielding portion 260 is provided at the end portion of the first outer layer 240 of the intermediate film 230. However, the non-shielding portion 260 may be provided at the end portion of the second outer layer 250 of the intermediate film 230.

### (With regard to the laminated glass for a vehicle according to the embodiment of the present invention)

Next, another type of laminated glass for a vehicle according to the embodiment of the present invention is described by referring to FIG. 6.

FIG. 6 schematically shows a cross-section of the other type of the laminated glass for a vehicle (which is referred to as "the third laminated glass for a vehicle," hereinafter) according to the embodiment of the present invention.

As shown in FIG. 6, basically, the third laminated glass 300 for a vehicle has a configuration that is similar to that of the above-described second laminated glass 200 for a vehicle, which is shown in FIG. 5. Thus, in FIG. 6, reference numerals that are obtained by adding 100 to the reference numerals that are shown in FIG. 5 are attached to members that are similar to those of FIG. 5.

However, the third laminated glass 300 for a vehicle is different from the second laminated glass 200 for a vehicle in a point that the intermediate film 330 is configured so that the thickness of the intermediate film 330 increases from the side of the bottom edge toward the side of the upper edge 370 of the third laminated glass 300 for a vehicle.

More specifically, each of the thickness of the first outer layer 340, the thickness of the inner layer 345, and the thickness of the second outer layer 350 increases from the side of the bottom edge toward the side of the upper edge 370 of the third laminated glass 300 for a vehicle. A difference between the film thickness at the bottom edge and the film thickness at the upper edge of the intermediate film 330 can be from 0.5 mm to 1.0 mm, for example.

Additionally, similar to the case of the second laminated glass 200 for a vehicle, the first outer layer 340 is provided with the non-shielding portion 360 at the side of the edge surface of the upper edge 370 of the third laminated glass 300 for a vehicle, and the non-shielded portion 360 may include an uncolored resin.

In general, upon introducing the non-shielding portion to the end portion of the first outer layer of the intermediate film, if the film thickness of the first outer layer is too small, it can be difficult to properly install such a non-shielding portion.

However, in the third laminated glass 300 for a vehicle, the non-shielding portion 360 is installed at the end portion of the first outer layer 340 at which the thickness is large (i.e., the end portion at the side of the upper edge 370). In this case, an advantage can be obtained such that the non-shielding portion 360 can be more easily and properly installed at the end portion of the first outer layer 340.

It can be apparent to those skilled in the art that, with the third laminated glass 300 for a vehicle that is configured in such a way, an effect can be obtained that is similar to those of the first laminated glass 100 for a vehicle and the second laminated glass 200 for a vehicle, namely, both an effect that temperature increase inside the vehicle can be suppressed and an effect that a sensor device can be properly operated are obtained.

Especially, for usual laminated glass for a vehicle provided with an intermediate film such that the thickness increases from a bottom edge toward an upper edge, a tendency that a light beam having a wavelength from that of visible light (a long-wavelength side) to near-infrared light is shielded becomes more significant because a thick intermediate film including a heat shielding material exists at a side of the upper edge of the laminated glass for a vehicle.

However, in the third laminated glass 300 for a vehicle, the non-shielding portion 360 that does not include a heat shielding material is installed at the end portion at the side of the upper edge 370 of the first outer layer 340. Consequently, with the third laminated glass 300 for a vehicle, a greater effect can be obtained with respect to the problem that a light beam having a wavelength from that of visible light (a long-wavelength side) to near-infrared light is shielded in an area at the side of the upper edge 370.

Note that, in the example of FIG. 6, the non-shielding portion 360 is installed at the end portion of the first outer layer 340 of the intermediate film 330. However, the non-shielding portion 360 may be provided at the end portion of the second outer layer 350 of the intermediate film 330.

Alternatively, the non-shielding portion 360 may be formed at both the end portions of the first outer layer 340 and the second outer layer 350 of the intermediate film 330.

Some configurations of the laminated glass for a vehicle according to the embodiment of the present invention are described above. However, it is apparent to those skilled in the art that the present invention is not limited to these embodiments.

For example, in the third laminated glass 300 for a vehicle that is shown in FIG. 6, all three layers 340, 345, 350 that form the intermediate film 330 are formed such that the thickness increases from the bottom edge toward the upper edge. However, only the first outer layer 340 and/or the second outer layer 350 that forms the intermediate film 330 may be formed such that the thickness increases from the bottom edge toward the upper edge (i.e., at least, the inner layer 345 that forms the intermediate film 330 may have almost uniform thickness).

It is apparent for those skilled in the art that various other changes and modifications can be made in the first to third laminated glass 100, 200, and 300 for a vehicle.

### INDUSTRIAL APPLICABILITY

The present invention can be utilized for laminated glass or the like for a vehicle, such as a windshield, rear glass, side glass, roof-glass, and so forth. Further, the present application is based on and claims the benefit of priority of Japanese Priority Application No. 2013-162413 filed on August 5, 2013, the entire contents of which are hereby incorporated herein by reference.

### DESCRIPTION OF THE REFERENCE NUMERALS

- 1: Usual laminated glass for vehicle
- 10: First glass substrate
- 20: Second glass substrate
- 30: Intermediate film
- 100: First laminated glass for vehicle
- 101: First main surface
- 102: Second main surface
- 103A: First area
- 103B: Second area
- 110: First glass substrate
- 111: First surface
- 112: Second surface
- 120: Second glass substrate
- 121: First surface
- 122: Second surface
- 130: Intermediate film
- 140: First outer layer
- 145: Inner layer
- 150: Second outer layer
- 160a: First non-shielding portion
- 160b: Second non-shielding portion
- 170: Upper edge
- 200: Second laminated glass for vehicle
- 201: First main surface
- 202: Second main surface
- 210: First glass substrate
- 211: First surface
- 212: Second surface
- 220: Second glass substrate
- 221: First surface
- 222: Second surface
- 230: Intermediate film
- 240: First outer layer
- 245: Inner layer
- 250: Second outer layer
- 260: Non-shielding portion
- 270: Upper edge
- 300: Third laminated glass for vehicle
- 301: First main surface
- 302: Second main surface
- 310: First glass substrate
- 311: First surface
- 312: Second surface
- 320: Second glass substrate
- 321: First surface
- 322: Second surface
- 330: Intermediate film
- 340: First outer layer
- 345: Inner layer
- 350: Second outer layer
- 360: Non-shielding portion
- 370: Upper edge

## Claims

1. Laminated glass for a vehicle, the laminated glass comprising:
an intermediate film that is disposed between a first glass substrate and a second glass substrate,
wherein the intermediate film includes, from a side that is close to the first glass substrate, a first outer layer, an inner layer, and a second outer layer,
wherein the inner layer has Shore hardness that is less than those of the first outer layer and the second outer layer,
wherein each of the first outer layer and the second outer layer includes an infrared shielding material,
wherein a first portion that includes almost no infrared shielding material is formed at an end portion of the first outer layer at an upper edge of the laminated glass, and the first portion includes an uncolored resin, and/or
wherein a second portion that includes almost no infrared shielding material is formed at the end portion of the second outer layer at the upper edge of the laminated glass, and the second portion includes an uncolored resin.

2. The laminated glass according to claim 1,
wherein the first portion and/or the second portion is formed over the entire end portion of the upper edge of the laminated glass.

3. The laminated glass according to claim 1 or 2,
wherein thickness of the intermediate film is greater at the end portion of the upper edge of the laminated glass compared to the thickness of the intermediate film at an end portion of a bottom edge of the laminated glass.

4. The laminated glass according to any one of claims 1 to 3,
wherein the laminated glass includes a first region and a second region, upon the laminated glass being viewed in a direction in which the first glass substrate and the second glass substrate are laminated,
wherein the first region corresponds to the first portion of the first outer layer and/or the second portion of the second outer layer, and
wherein a sensor is installed in the first region of the laminated glass.
